# EUROPEAN PATENT SPECIFICATION

(11) **EP 3 220 695 B1**
(45) Date of publication and mention of the grant of the patent: **03.10.2018**
(21) Application number: 15865180.2
(22) Date of filing: 01.12.2015
(51) Int. Cl.: H04W 52/02, H04B 1/403

(54) **POWER AMPLIFIER CONTROL DEVICE AND METHOD**
LEISTUNGSVERSTÄRKERREGELUNGSVORRICHTUNG UND -VERFAHREN
DISPOSITIF ET PROCÉDÉ DE COMMANDE D'AMPLIFICATEUR DE PUISSANCE

(30) Priority: 02.12.2014 CN 201410720344
(43) Date of publication of application: 20.09.2017
(73) Proprietor: Huawei Technologies Co., Ltd., Longgang District Shenzhen, Guangdong 518129 (CN)
(72) Inventor: ZENG, Yongmei, Shenzhen Guangdong 518129 (CN); ZHU, Jiang, Shenzhen Guangdong 518129 (CN)
(74) Representative: Körber, Martin Hans
(86) International application number: PCT/CN2015/096093
(87) International publication number: WO 2016/086829

(56) References cited:
- EP-A1- 2 296 428
- CN-A- 101 072 434
- CN-A- 101 388 648
- CN-A- 103 633 949
- CN-A- 104 507 147
- US-A1- 2007 015 472
- US-A1- 2007 015 472
- US-A1- 2011 194 429

## Description

### TECHNICAL FIELD

The present invention relates to the field of base station device control technologies, and specifically, to an apparatus and a method for controlling a power amplifier.

### BACKGROUND

LTE (Lone Term Evolution, Long Term Evolution) is an evolved network of UMTS (Universal Mobile Telecommunications System, Universal Mobile Telecommunications System) of 3GPP networks. The LTE improves and enhances an air access technology of 3G, and uses OFDM (Orthogonal Frequency Division Multiplexing, orthogonal frequency division multiplexing) and MIMO (Multiple-Input Multiple-Output, Multi Input Multi Output) as wireless network evolution technologies of the LTE.

To meet a requirement of an increase in a data service in an LTE communications standard and improve utilization efficiency of a frequency spectrum, an operator accelerates LTE deployment by refarming the existing frequency spectrums in the GSM (Global System for Mobile Communication, Global system for mobile communications) standard. For example, generally, the operator has relatively abundant frequency spectrums in a frequency band of 1800 MHz. As a terminal industry chain of LTE 1800 MHz gradually becomes mature, the operator lowers configuration of GSM 1800, and sorts out a bandwidth of 10 M (megabyte) or 15 M in the frequency band of 1800 MHz for use by a data service in the LTE communications standard, so that the GSM communications standard and LTE communications standard share the frequency band of 1800 MHz.

For multiple communications standards sharing a frequency band, the shared frequency band is usually deployed by using a multimode base station. Therefore, the GSM communications standard and the LTE communications standard share a radio frequency module of an MSR base station, so as to support subsequent continuous network evolution, thereby reducing site costs. However, because the GSM communications standard and the LTE communications standard share a same radio frequency module, a method that is for controlling a power amplifier in the radio frequency module and originally designed for a single communications standard is not applicable to controlling a power amplifier in multiple communications standards. Therefore, it is urgent to provide the multiple communications standards with a method for controlling a power amplifier, so as to reduce energy consumption of the multimode base station. EP 2 296 428 A1 discloses a related multimode base station with a common transmission module.

### SUMMARY

According to a first aspect, the present invention provides an apparatus for controlling a power amplifier, where the apparatus is applied to a multimode base station, the multimode base station is applied to a first communications standard and a second communications standard, the first communications standard is different from the second communications standard, and the apparatus includes:
a first obtaining unit, configured to obtain a first service situation of the multimode base station in the first communications standard and a second service situation of the multimode base station in the second communications standard;
a first determining unit, configured to determine, according to the first service situation, whether data is sent in a current first transmission time duration, where the first transmission time duration is a minimum data transmission time duration in the first communications standard;
a second determining unit, configured to determine, according to the second service situation, whether data is sent in a current second transmission time duration, where the second transmission time duration is a minimum data transmission time duration in the second communications standard;
a second obtaining unit, configured to obtain a shorter duration between the first transmission time duration and the second transmission time duration when no data is sent in the first transmission time duration and no data is sent in the second transmission time duration; and
a first control unit, configured to shut down the power amplifier by using the obtained duration as a minimum granularity.

In a first feasible manner of the first aspect, the apparatus further includes a second control unit, configured to start the power amplifier when data is sent in the first transmission time duration or data is sent in the second transmission time duration.

In a second feasible manner of the first aspect, that the first control unit shuts down the power amplifier by using the obtained duration as a minimum granularityincludes: controlling a duration for shutting down the power amplifier to be less than the obtained duration.

In a third feasible manner of the first aspect, the first control unit includes a comparison subunit, a first control subunit, and a second control subunit, where
the comparison subunit is configured to compare a preset shutdown duration of the power amplifier with the obtained duration;
the first control subunit is configured to: when the preset shutdown duration is less than or equal to the obtained duration, control the power amplifier to be in a shutdown state in the preset shutdown duration; and
the second control subunit is configured to: when the preset shutdown duration is greater than the obtained duration, control the power amplifier to be in a shutdown state in the obtained duration.

In a fourth feasible manner of the first aspect, that the first obtaining unit obtains the first service situation of the multimode base station in the first communications standard includes: in a first preset period starting from an initial moment of the current first transmission time duration in the first communications standard, performing data sampling on the first transmission time duration to obtain a first data sampling result that indicates the first service situation;
that the first determining unit determines, according to the first service situation, whether data is sent in the current first transmission time duration includes: determining whether data that is in the first data sampling result and obtained by N consecutive times of sampling starting from the initial moment is 0;
that the first obtaining unit obtains the second service situation of the multimode base station in the second communications standard includes: in a second preset period starting from an initial moment of the current second transmission time duration in the second communications standard, performing data sampling on the second transmission time duration to obtain a second data sampling result that indicates the second service situation; and
that the second determining unit determines, according to the second service situation, whether data is sent in the current second transmission time duration includes: determining whether data that is in the second data sampling result and obtained by N consecutive times of sampling starting from the initial moment is 0.

According to a second aspect, the present invention further provides a method for controlling a power amplifier, where the method is applied to a multimode base station, the multimode base station is applied to a first communications standard and a second communications standard, the first communications standard is different from the second communications standard, and the method includes:
obtaining a first service situation of the multimode base station in the first communications standard and a second service situation of the multimode base station in the second communications standard;
determining, according to the first service situation, whether data is sent in a current first transmission time duration, where the first transmission time duration is a minimum data transmission time duration in the first communications standard;
determining, according to the second service situation, whether data is sent in a current second transmission time duration, where the second transmission time duration is a minimum data transmission time duration in the second communications standard;
obtaining a shorter duration between the first transmission time duration and the second transmission time duration when no data is sent in the first transmission time duration and no data is sent in the second transmission time duration; and
shutting down the power amplifier by using the obtained duration as a minimum granularity.

In a first feasible manner of the second aspect, the power amplifier is started when data is sent in the first transmission time duration or data is sent in the second transmission time duration.

In a second feasible manner of the second aspect, the shutting down the power amplifier by using the obtained duration as a minimum granulaarityincludes: controlling a duration for shutting down the power amplifier to be less than the obtained duration.

In a third feasible manner of the second aspect, the shutting down the power amplifier by using the obtained duration as a minimum granularityincludes:
comparing a preset shutdown duration of the power amplifier with the obtained duration;
when the preset shutdown duration is less than or equal to the obtained duration, controlling the power amplifier to be in a shutdown state in the preset shutdown duration; or
when the preset shutdown duration is greater than the obtained duration, controlling the power amplifier to be in a shutdown state in the obtained duration.

In a fourth feasible manner of the second aspect, the obtaining a first service situation of the multimode base station in the first communications standard includes: in a first preset period starting from an initial moment of the current first transmission time duration in the first communications standard, performing data sampling on the first transmission time duration to obtain a first data sampling result that indicates the first service situation;
the determining, according to the first service situation, whether data is sent in a current first transmission time duration includes: determining whether data that is in the first data sampling result and obtained by N consecutive times of sampling starting from the initial moment is 0;
the obtaining a second service situation of the multimode base station in the second communications standard includes: in a second preset period starting from an initial moment of the current second transmission time duration in the second communications standard, performing data sampling on the second transmission time duration to obtain a second data sampling result that indicates the second service situation; and
the determining, according to the second service situation, whether data is sent in a current second transmission time duration includes: determining whether data that is in the second data sampling result and obtained by N consecutive times of sampling starting from the initial moment is 0.

By using the technical solutions provided in the present invention, when no data is sent in a first transmission time duration in a first communications standard and no data is sent in a second transmission time duration in a second communications standard, a multimode base station may obtain a shorter duration between the first transmission time duration and the second transmission time duration, and shut down a power amplifier by using the obtained duration as a minimum granularity. Therefore, the multimode base station may control shutdown of a power amplifier in multiple communications standards, reducing energy consumption of the multimode base station.

### BRIEF DESCRIPTION OF DRAWINGS

To describe the technical solutions in the embodiments of the present application more clearly, the following briefly describes the accompanying drawings required for describing the embodiments. Apparently, the accompanying drawings in the following description show merely some embodiments of the present application, and a person of ordinary skill in the art may still derive other drawings from these accompanying drawings without creative efforts.
FIG. 1 is a schematic diagram of a subframe of a pilot pattern in a single antenna port in the prior art;
FIG. 2 is a schematic structural diagram of an apparatus for controlling a power amplifier according to an embodiment of the present invention;
FIG. 3 is a schematic structural diagram of timeslots of the GSM communications standard and the LTE communications standard according to an embodiment of the present invention;
FIG. 4 is a schematic diagram of a data sending situation according to an embodiment of the present invention;
FIG. 5 is a schematic structural diagram of timeslots of the LTE communications standard and the UMTS communications standard according to an embodiment of the present invention;
FIG. 6 is another schematic structural diagram of an apparatus for controlling a power amplifier according to an embodiment of the present invention;
FIG. 7 is a flowchart of a method for controlling a power amplifier according to an embodiment of the present invention; and
FIG. 8 is a schematic structural diagram of a multimode base station according to an embodiment of the present invention.

### DESCRIPTION OF EMBODIMENTS

Currently, a multimode base station may be applied to multiple communications standards. For example, a multimode base station is applied to the GSM communications standard and the LTE communications standard, and a minimum data transmission unit in the GSM communications standard is a timeslot whose duration is (15/26) ms. When the multimode base station is applied to the GSM communications standard, the multimode base station may control a power amplifier according to whether data is sent in the timeslot. For example, in eight timeslots, data is sent in only one timeslot, and no data is sent in the other seven timeslots. Therefore, the multimode base station may control the power amplifier to be started in the timeslot in which data is sent, and correspondingly, control the power amplifier to be shutdown in the timeslots in which no data is sent. That is, in the GSM communications standard, the multimode base station completes, in a time of a timeslot level, an action of controlling start and shutdown of a power amplifier, so as to save energy consumed by the power amplifier when a timeslot is idle to maintain a fixed bias voltage in a linear working region.

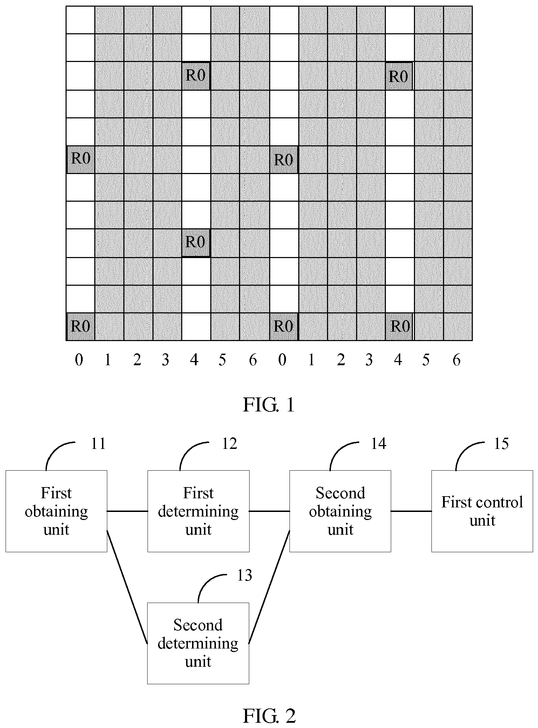

A minimum data transmission unit in the LTE communications standard is a symbol whose duration is (0.5/7) ms. When the multimode base station is applied to the LTE communications standard, the multimode base station dynamically detects symbols on which no data is sent, shuts down the power amplifier in duration of the symbols on which no data is sent, and starts the power amplifier in duration of a symbol on which data is sent. A subframe of a pilot pattern in a single antenna port is used as an example. As shown in FIG. 1, R0 in FIG. 1 indicates that data is sent. Therefore, the power amplifier may be shutdown in duration of symbols #1, #2, #3, #5, and #6 in a subframe shown in FIG. 1.

It can be learned from the foregoing analysis that in each communications standard, the multimode base station uses duration of a minimum data transmission unit of each communications standard to control shutting down and starting of a power amplifier. However, minimum data transmission units in all communications standards have different duration. Therefore, in the multimode base station, a method that is for controlling a power amplifier in a radio frequency module and originally designed for a single communications standard is not applicable to controlling a power amplifier in multiple communications standards.

To resolve this problem, a core idea of an apparatus and a method for controlling a power amplifier that are provided in the embodiments of the present invention is obtaining duration of a minimum data transmission unit in each communications standard, and selecting shorter duration as a reference to control shutting down and starting of a power amplifier.

To make a person skilled in the art understand the present invention better, the following clearly and completely describes the technical solutions in the embodiments of the present invention with reference to the accompanying drawings in the embodiments of the present invention. Apparently, the described embodiments are merely a part rather than all of the embodiments of the present application. All other embodiments obtained by a person of ordinary skill in the art based on the embodiments of the present invention without creative efforts shall fall within the protection scope of the present invention.

Referring to FIG. 2, FIG. 2 shows a structure of an apparatus for controlling a power amplifier according to an embodiment of the present invention, where the apparatus is applied to a multimode base station. The multimode base station is applied to a first communications standard and a second communications standard, and the first communications standard is different from the second communications standard. The apparatus for controlling a power amplifier shown in FIG. 2 may include a first obtaining unit 11, a first determining unit 12, a second determining unit 13, a second obtaining unit 14, and a first control unit 15.

The first obtaining unit 11 is configured to obtain a first service situation of the multimode base station in the first communications standard and a second service situation of the multimode base station in the second communications standard.

The first communications standard and the second communications standard are two types of communications references, such as the foregoing GSM communications standard and LTE communications standard, applied to the multimode base station. To control the power amplifier in the first communications standard and the second communications standard, the first service situation in the first communications standard and the second service situation in the second communications standard that are of the multimode base station need to be obtained first. The first service situation and the second service situation may indicate whether data is sent. Further, shutting down and starting of a power amplifier may be controlled according to whether data is sent.

In this embodiment of the present invention, the first obtaining unit 11 may use a data sampling result as a manner of indicating a service situation. For example, the first obtaining unit 11 may perform, in a first preset period starting from an initial moment of a current first transmission unit in the first communications standard, data sampling on the first transmission unit to obtain a first data sampling result that indicates the first service situation. Correspondingly, the first obtaining unit 11 may perform, in a second preset period starting from an initial moment of a current second transmission unit in the second communications standard, data sampling on the second transmission unit to obtain a second data sampling result that indicates the second service situation.

The first preset period and the second preset period are sampling time that is set by the first obtaining unit 11 and that can ensure that the first obtaining unit 11 can collect sufficient data to indicate a current data sampling result of service situations in the first transmission unit and the second transmission unit, and specifically, may be set according to precision for determining a service situation by the multimode base station.

The first determining unit 12 is configured to determine, according to the first service situation, whether data is sent in the current first transmission unit, where the first transmission unit is a minimum data transmission unit in the first communications standard.

For example, the first communications standard is the GSM communications standard, and the first transmission unit is a timeslot. When it is determined according to the first service situation that data is sent in the current first transmission unit, the apparatus for controlling a power amplifier needs to start the power amplifier to send data. When it is determined according to the first service situation that no data is sent in the current first transmission unit, the apparatus for controlling a power amplifier needs to further determine whether data is sent in the second transmission unit in the second communications standard, and then controls start and shutdown of the power amplifier according to a determining result indicating whether data is sent in the second transmission unit.

When the first service situation is indicated by the first data sampling result, a feasible manner in which the first determining unit 12 determines whether data is sent in the current first transmission unit is: determining whether data that is in the first data sampling result and obtained by N consecutive times of sampling starting from an initial moment is 0, that is, whether all data obtained by N consecutive times of sampling starting from an initial moment is 0; and if all data is 0, it indicates that no data is sent in the first transmission unit; or if any one piece of data is not 0, it indicates that data is sent in the first transmission unit.

The second determining unit 13 is configured to determine, according to the second service situation, whether data is sent in the current second transmission unit, where the second transmission unit is a minimum data transmission unit in the second communications standard.

For example, the second communications standard is the LTE communications standard, and the second transmission unit is a symbol. When it is determined according to the second service situation that data is sent in the current second transmission unit, the apparatus for controlling a power amplifier needs to start the power amplifier to send data. When it is determined according to the second service situation that no data is sent in the current second transmission unit, the apparatus for controlling a power amplifier may shut down the power amplifier to reduce power consumption of the multimode base station.

When the second service situation is indicated by the second data sampling result, a feasible manner in which the second determining unit 13 determines whether data is sent in the current second transmission unit is: determining whether data that is in the second data sampling result and obtained by N consecutive times of sampling starting from an initial moment is 0, that is, whether all data obtained by N consecutive times of sampling starting from an initial moment is 0; and if all data is 0, it indicates that no data is sent in the second transmission unit; or if any one piece of data is not 0, it indicates that data is sent in the second transmission unit.

The second obtaining unit 14 is configured to obtain shorter duration between duration of the first transmission unit and duration of the second transmission unit when no data is sent in the first transmission unit and no data is sent in the second transmission unit.

The first control unit 15 is configured to shut down the power amplifier by using the obtained duration as a reference.

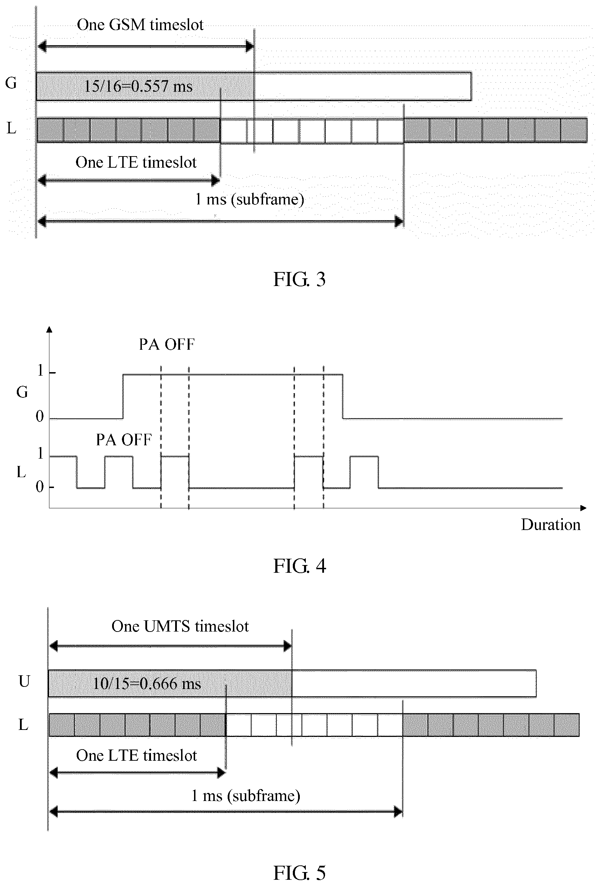

The foregoing GSM communications standard and LTE communications standard are used as examples. Timeslot structures of the GSM communications standard and the LTE communications standard are shown in FIG. 3, where G represents the GSM communications standard, and L represents the LTE communications standard. One LTE timeslot includes eight symbols, duration (15/26) ms of a timeslot, the minimum data transmission unit in the GSM communications standard, is 8.08 times duration (0.5/7) ms of a symbol, the minimum data transmission unit in the LTE communications standard, and in the multimode base station, the power amplifier has a symbol-level shutting down capability. Therefore, in this embodiment of the present invention, the apparatus for controlling a power amplifier may consider using the symbol in the LTE communications standard as a minimum granularity to control start and shutdown of a power amplifier. That is, longest duration for starting and shutting down a power amplifier is the duration of the symbol in the LTE communications standard. Therefore, when no data is sent in the first transmission unit and no data is sent in the second transmission unit, duration obtained by the second obtaining unit 14 is the duration (0.5/7) ms of a symbol, the minimum data transmission unit in the LTE communications standard, and the first control unit 15 shuts down the power amplifier by using (0.5/7) ms as a reference.

Corresponding to the timeslot structures shown in FIG. 3, a data sending situation may be indicated by a level value. For example, as shown in FIG. 4, a horizontal coordinate represents duration, and a vertical coordinate represents a data sending situation. A level 1 indicates that no data is sent, and a level 0 indicates that data is sent. When data is sent in the timeslot in the GSM communications standard or data is sent in the symbol in the LTE communications standard, the power amplifier (PA) is controlled to be started; otherwise, the power amplifier is controlled to be shutdown. For example, PA OFF in FIG. 4 indicates that the power amplifier is shutdown.

When the data sending situation is indicated by the level value shown in FIG. 4, the first control unit 15 may use a level that is shown in FIG. 4 and that indicates the data sending situation in each communications standard as an input signal that is of an AND gate and that is set on the multimode base station. An output signal of the AND gate controls the power amplifier. A control principle of the output signal is: when a level indicates that data is sent in at least one communications standard, the AND gate outputs an output signal for controlling starting of the power amplifier; and when the level indicates that no data is sent in any communications standard in the multimode base station, the AND gate outputs an output signal for controlling shutting down of the power amplifier. Specifically, when an output signal of the AND gate is 1, it indicates that no data is sent in any communications standard, and the power amplifier is controlled to be shutdown; or when an output signal of the AND gate is 0, it indicates that data is sent in at least one communications standard, and the power amplifier is controlled to be started.

It may be seen from FIG. 4 and a logical operation manner corresponding to FIG. 4 that in this embodiment of the present invention, controlling a power amplifier needs to meet the following conditions: When data is sent in at least one communications standard in the multimode base station, the power amplifier is controlled to be started; or when no data is sent in any communications standard in the multimode base station, the power amplifier is controlled to be shutdown. Therefore, after the foregoing conditions for controlling a power amplifier are met, in this embodiment of the present invention, another logical operation manner may be used to control the start and shutdown of the power amplifier, and is not listed one by one in this embodiment of the present invention.

In addition, the apparatus for controlling a power amplifier provided in this embodiment of the present invention may also be applied to a multimode base station whose two types of communications standards are the LTE communications standard and the UMTS (Universal Mobile Telecommunications System, Universal Mobile Telecommunications System) communications standard. Timeslot structures of the LTE communications standard and the UMTS communications standard are shown in FIG. 5, where U represents the GSM communications standard, and L represents the LTE communications standard. One LTE timeslot includes eight symbols, and a length of each timeslot in the UMTS communications standard is 10 ms/15, which is approximately 667 µs, and is approximately 9.3 times the length of the symbol in the LTE communications standard. Therefore, when no data is sent in either of the two communications standards, the symbol in the LTE communications standard may be considered as a minimum granularity to control start and shutdown of a power amplifier.

It should be noted that UMTS uses a transmission manner of code division multiplexing, a pilot channel constantly performs transmission, and a pilot and data use a same power amplifier in a current conventional structure of the multimode base station; therefore the power amplifier cannot be shutdown and started only according to data transmission. For a multimode base station structure in which data and a pilot are carried by using separate power amplifiers, a power amplifier that carries a data service may be dynamically shutdown or started according to the method for controlling a power amplifier provided in this embodiment of the present invention, that is, according to data sending situations in two communications standards.

By using the foregoing technical solution, when no data is sent in a first transmission unit in a first communications standard and no data is sent in a second transmission unit in a second communications standard, the apparatus for controlling a power amplifier may obtain shorter duration between duration of the first transmission unit and duration of the second transmission unit, and shut down the power amplifier by using the obtained duration as a reference. Therefore, a multimode base station may control shutdown of the power amplifier in multiple communications standards, reducing energy consumption of the multimode base station.

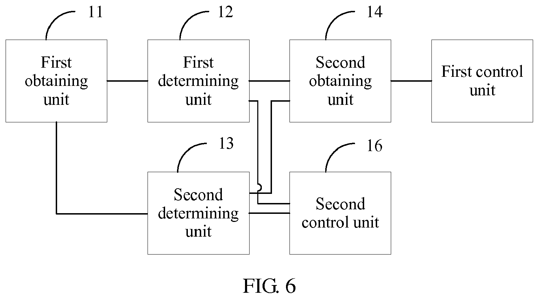

On the basis of FIG. 2, the apparatus for controlling a power amplifier provided in this embodiment of the present invention may further include a second control unit 16. As shown in FIG. 6, the second control unit is configured to start the power amplifier when data is sent in the first transmission unit or data is sent in the second transmission unit.

In addition, in this embodiment of the present invention, a feasible manner in which the first control unit 15 shuts down the power amplifier by using the obtained duration as a reference is: controlling duration for shutting down the power amplifier to be less than the obtained duration. For example, when the symbol in the LTE communications standard is used as the minimum granularity to control the start and shutdown of the power amplifier, the first control unit 15 may use duration less than the symbol in the LTE communications standard as shutdown duration to control shutdown of the power amplifier.

Another feasible manner is: the first control unit 15 may further preset shutdown duration of the power amplifier; a comparison subunit in the first control unit 15 compares the preset shutdown duration of the power amplifier with the obtained duration; and when the shutdown duration is less than or equal to the obtained duration, a first control subunit in the first control unit 15 controls the power amplifier to be in a shutdown state in the shutdown duration; otherwise, when the shutdown duration is greater than the obtained duration, a second control subunit in the first control unit 15 controls the power amplifier to be in a shutdown state in the obtained duration.

The preset shutdown duration is duration in which data sending of the multimode base station is not affected when the power amplifier is shutdown, and this embodiment of the present invention sets no limitation on a specific value of the duration.

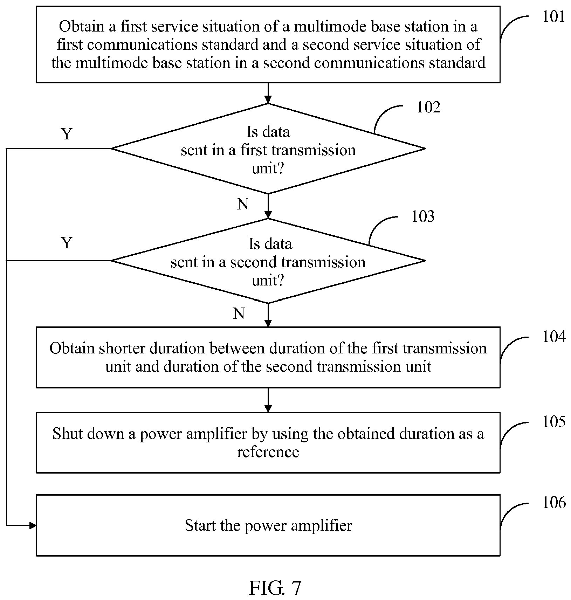

Corresponding to the foregoing apparatus embodiment, an embodiment of the present invention further provides a method for controlling a power amplifier. Referring to FIG. 7, FIG. 7 shows a method for controlling a power amplifier according to an embodiment of the present invention, where the method is applied to a multimode base station. The multimode base station is applied to a first communications standard and a second communications standard, and the first communications standard is different from the second communications standard. The method for controlling a power amplifier shown in FIG. 7 may include the following steps.

101: S101. Obtain a first service situation of the multimode base station in the first communications standard and a second service situation of the multimode base station in the second communications standard.

The first communications standard and the second communications standard are two types of communications references, such as the foregoing GSM communications standard and LTE communications standard, applied to the multimode base station. To control the power amplifier in the first communications standard and the second communications standard, the first service situation in the first communications standard and the second service situation in the second communications standard that are of the multimode base station need to be obtained first. The first service situation and the second service situation may indicate whether data is sent. Further, shutting down and starting of a power amplifier may be controlled according to whether data is sent.

In this embodiment of the present invention, the multimode base station may use a data sampling result as a manner of indicating a service situation. For example, the multimode base station may perform, in a first preset period starting from an initial moment of a current first transmission unit in the first communications standard, data sampling on the first transmission unit to obtain a first data sampling result that indicates the first service situation. Correspondingly, the multimode base station may perform, in a second preset period starting from an initial moment of a current second transmission unit in the second communications standard, data sampling on the second transmission unit to obtain a second data sampling result that indicates the second service situation.

The first preset period and the second preset period are sampling time that is set by the multimode base station and that can ensure that the multimode base station can collect sufficient data to indicate a current data sampling result of service situations in the first transmission unit and the second transmission unit, and specifically, may be set according to precision for determining a service situation by the multimode base station.

S102. Determine, according to the first service situation, whether data is sent in a current first transmission unit; and if data is sent in the current first transmission unit, perform step 106; or if no data is sent in the current first transmission unit, perform step 103.

The first transmission unit is a minimum data transmission unit in the first communications standard. For example, the first communications standard is the GSM communications standard, and the first transmission unit is a timeslot. When it is determined according to the first service situation that data is sent in the current first transmission unit, the multimode base station needs to start the power amplifier to send data. When it is determined according to the first service situation that no data is sent in the current first transmission unit, the multimode base station needs to further determine whether data is sent in the second transmission unit in the second communications standard, and then controls start and shutdown of the power amplifier according to a determining result indicating whether data is sent in the second transmission unit.

When the first service situation is indicated by the first data sampling result, a feasible manner of determining whether data is sent in the current first transmission unit is: determining whether data that is in the first data sampling result and obtained by N consecutive times of sampling starting from an initial moment is 0, that is, whether all data obtained by N consecutive times of sampling starting from an initial moment is 0; and if all data is 0, it indicates that no data is sent in the first transmission unit; or if any one piece of data is not 0, it indicates that data is sent in the first transmission unit.

103: S103. Determine, according to the second service situation, whether data is sent in a current second transmission unit; and if data is sent in the current second transmission unit, perform step 104; or if no data is sent in the current second transmission unit, perform step 106.

The second transmission unit is a minimum data transmission unit in the second communications standard. For example, the second communications standard is the LTE communications standard, and the second transmission unit is a symbol. When it is determined according to the second service situation that data is sent in the current second transmission unit, the multimode base station needs to start the power amplifier to send data. When it is determined according to the second service situation that no data is sent in the current second transmission unit, the multimode base station may shut down the power amplifier to reduce power consumption of the multimode base station.

When the second service situation is indicated by the second data sampling result, a feasible manner of determining whether data is sent in the current second transmission unit is: determining whether data that is in the second data sampling result and obtained by N consecutive times of sampling starting from an initial moment is 0, that is, whether all data obtained by N consecutive times of sampling starting from an initial moment is 0; and if all data is 0, it indicates that no data is sent in the second transmission unit; or if any one piece of data is not 0, it indicates that data is sent in the second transmission unit.

S104. Obtain shorter duration between duration of the first transmission unit and duration of the second transmission unit.

S105. Shut down a power amplifier by using the obtained duration as a reference.

The timeslot structures of the foregoing GSM communications standard and LTE communications standard shown in FIG. 3 are used as examples. One LTE timeslot includes eight symbols, duration (15/26) ms of a timeslot, the minimum data transmission unit in the GSM communications standard, is 8.08 times duration (0.5/7) ms of a symbol, the minimum data transmission unit in the LTE communications standard, and in the multimode base station, the power amplifier has a symbol-level shutting down capability. Therefore, in this embodiment of the present invention, the multimode base station may consider using the symbol in the LTE communications standard as a minimum granularity to control the start and shutdown of the power amplifier. That is, longest duration for starting and shutting down a power amplifier is the duration of the symbol in the LTE communications standard. That is, when no data is sent in the GSM communications standard and the LTE communications standard, the duration obtained by the multimode base station is the duration (0.5/7) ms of a symbol, the minimum data transmission unit in the LTE communications standard, and the (0.5/7) ms is used as a reference to shut down the power amplifier.

Corresponding to the timeslot structures shown in FIG. 3, a data sending situation may be indicated by a level value. For example, as shown in FIG. 4, a horizontal coordinate represents duration, and a vertical coordinate represents a data sending situation. A level 1 indicates that no data is sent, and a level 0 indicates that data is sent. When data is sent in the timeslot in the GSM communications standard or data is sent in the symbol in the LTE communications standard, the multimode base station controls the power amplifier (PA) to be started; otherwise, controls the power amplifier to be shutdown. For example, PA OFF in FIG. 4 indicates that the power amplifier is shutdown.

When the multimode base station uses a level value shown in FIG. 4 to indicate the data sending situation, the multimode base station may use a level that is shown in FIG. 4 and that indicates the data sending situation in each communications standard as an input signal that is of an AND gate and that is set on the multimode base station. An output signal of the AND gate controls the power amplifier. A control principle of the output signal is: when a level indicates that data is sent in at least one communications standard, the AND gate outputs an output signal for controlling starting of the power amplifier; and when the level indicates that no data is sent in any communications standard in the multimode base station, the AND gate outputs an output signal for controlling shutting down of the power amplifier. Specifically, when an output signal of the AND gate is 1, it indicates that no data is sent in any communications standard, and the power amplifier is controlled to be shutdown; or when an output signal of the AND gate is 0, it indicates that data is sent in at least one communications standard, and the power amplifier is controlled to be started.

It may be seen from FIG. 4 and a logical operation manner corresponding to FIG. 4 that in this embodiment of the present invention, controlling a power amplifier needs to meet the following conditions: When data is sent in at least one communications standard in the multimode base station, the power amplifier is controlled to be started; or when no data is sent in any communications standard in the multimode base station, the power amplifier is controlled to be shutdown. Therefore, after the foregoing conditions for controlling a power amplifier are met, in this embodiment of the present invention, another logical operation manner may be used to control the start and shutdown of the power amplifier, and is not listed one by one in this embodiment of the present invention.

In addition, the method for controlling a power amplifier provided in this embodiment of the present invention may also be applied to a multimode base station whose two types of communications standards are the LTE communications standard and the UMTS communications standard. Timeslot structures of the LTE communications standard and the UMTS communications standard are shown in FIG. 5, where U represents the GSM communications standard, and L represents the LTE communications standard. One LTE timeslot includes eight symbols, and a length of each timeslot in the UMTS communications standard is 10 ms/15, which is approximately 667 µs, and is approximately 9.3 times the length of the symbol in the LTE communications standard. Therefore, when no data is sent in either of the two communications standards, the symbol in the LTE communications standard may be considered as a minimum granularity to control start and shutdown of a power amplifier.

It should be noted that UMTS uses a transmission manner of code division multiplexing, a pilot channel constantly performs transmission, and a pilot and data use a same power amplifier in a current conventional structure of the multimode base station; therefore, the power amplifier cannot be shutdown and started only according to data transmission. For a multimode base station structure in which data and a pilot are carried by using separate power amplifiers, a power amplifier that carries a data service may be dynamically shutdown or started according to the method for controlling a power amplifier provided in this embodiment of the present invention, that is, according to data sending situations in two communications standards.

S106. Start the power amplifier. The power amplifier is started when data is sent in the first transmission unit or data is sent in the second transmission unit.

By using the foregoing technical solution, when no data is sent in a first transmission unit in a first communications standard and no data is sent in a second transmission unit in a second communications standard, the multimode base station may obtain shorter duration between duration of the first transmission unit and duration of the second transmission unit, and shut down the power amplifier by using the obtained duration as a reference. Therefore, the multimode base station may control shutdown of a power amplifier in multiple communications standards, reducing energy consumption of the multimode base station.

Further, in this embodiment of the present invention, a feasible manner of shutting down the power amplifier by using the obtained duration as a reference is: controlling duration for shutting down the power amplifier to be less than the obtained duration. For example, when the symbol in the LTE communications standard is used as the minimum granularity to control the start and shutdown of a power amplifier, duration less than the symbol in the LTE communications standard may be used as shutdown duration to control the shutting down of a power amplifier.

Another feasible manner is: a preset shutdown duration of the power amplifier is compared with the duration obtained in step 104; and when the shutdown duration is less than or equal to the obtained duration, the power amplifier is controlled to be in a shutdown state in the shutdown duration; or when the shutdown duration is greater than the obtained duration, the power amplifier is controlled to be in a shutdown state in the obtained duration. The preset shutdown duration is duration in which data sending of the multimode base station is not affected when the power amplifier is shutdown, and this embodiment of the present invention sets no limitation on a specific value of the duration.

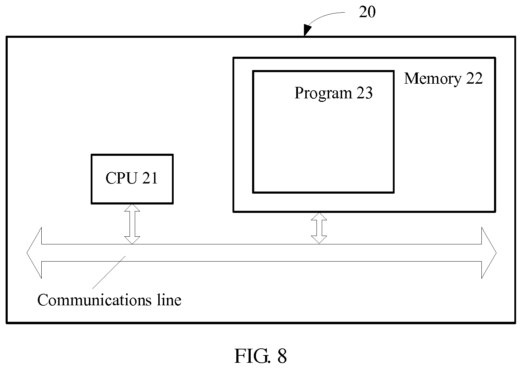

In addition, an embodiment of the present invention further provides a multimode base station. The multimode base station is applied to a first communications standard and a second communications standard, and the first communications standard is different from the second communications standard. As shown in FIG. 8, in terms of hardware, a multimode base station 20 may include a CPU (Central Processing Unit, central processing unit) 21 and a memory 22. The CPU 21 executes at least the following steps by running a software program 23 stored in the memory 22:
obtaining a first service situation of the multimode base station in the first communications standard and a second service situation of the multimode base station in the second communications standard;
determining, according to the first service situation, whether data is sent in a current first transmission unit, where the first transmission unit is a minimum data transmission unit in the first communications standard;
determining, according to the second service situation, whether data is sent in a current second transmission unit, where the second transmission unit is a minimum data transmission unit in the second communications standard;
obtaining shorter duration between duration of the first transmission unit and duration of the second transmission unit when no data is sent in the first transmission unit and no data is sent in the second transmission unit;
shutting down the power amplifier by using the obtained duration as a reference; and
starting the power amplifier when data is sent in the first transmission unit or data is sent in the second transmission unit.

A method embodiment basically corresponds to an apparatus embodiment; therefore, for related parts, refer to partial descriptions in the method embodiment. The above-described apparatus embodiment is merely an example. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. A person of ordinary skill in the art may understand and implement the embodiments of the present invention without creative efforts.

In the several embodiments provided in the present application, it should be understood that the disclosed apparatus and method may be implemented in other manners without departing from the scope of the present application. Current embodiments are merely examples, and should not be construed as a limitation. Specific content provided in the embodiments should not set any limitation on a purpose of this application. For example, the unit or subunit division is merely logical function division and may be other division in actual implementation. For example, a plurality of units or subunits may be combined. In addition, a plurality of units or components may be combined or integrated into another system, or some features may be ignored or not performed.

The foregoing descriptions are merely specific implementation manners of the present invention. It should be noted that a person of ordinary skill in the art may make several improvements or polishing without departing from the principle of the present invention and the improvements or polishing shall fall within the protection scope of the present invention.

## Claims

1. An apparatus for controlling a power amplifier, wherein the apparatus is applied to a multimode base station, the multimode base station is applied to a first communications standard and a second communications standard, the first communications standard is different from the second communications standard, and the apparatus comprises:
a first obtaining unit (11), configured to obtain a first service situation of the multimode base station in the first communications standard and a second service situation of the multimode base station in the second communications standard;
a first determining unit (12), configured to determine, according to the first service situation, whether data is sent in a current first transmission time duration, wherein the first transmission time duration is a minimum data transmission time duration in the first communications standard;
a second determining unit (13), configured to determine, according to the second service situation, whether data is sent in a current second transmission time duration, wherein the second transmission time duration is a minimum data transmission time duration in the second communications standard;
a second obtaining unit (14), configured to obtain a shorter duration between the first transmission time duration and the second transmission time duration when no data is sent in the first transmission time duration and no data is sent in the second transmission time duration; and
a first control unit (15), configured to shut down the power amplifier by using the obtained duration as a minimum granularity.

2. The apparatus according to claim 1, wherein the apparatus further comprises a second control unit (16), configured to start the power amplifier when data is sent in the first transmission time duration or data is sent in the second transmission time duration.

3. The apparatus according to claim 1, wherein the first control unit (15) is specifically configured to control a duration for shutting down the power amplifier to be less than the obtained duration.

4. The apparatus according to claim 1, wherein the first control unit (15) comprises a comparison subunit, a first control subunit, and a second control subunit, wherein
the comparison subunit is configured to compare a preset shutdown duration of the power amplifier with the obtained duration;
the first control subunit is configured to: when the preset shutdown duration is less than or equal to the obtained duration, control the power amplifier to be in a shutdown state in the preset shutdown duration; and
the second control subunit is configured to: when the preset shutdown duration is greater than the obtained duration, control the power amplifier to be in a shutdown state in the obtained duration.

5. The apparatus according to claim 1, wherein that the first obtaining unit (11) obtains the first service situation of the multimode base station in the first communications standard comprises: in a first preset period starting from an initial moment of the current first transmission time duration in the first communications standard, performing data sampling on the first transmission time duration to obtain a first data sampling result that indicates the first service situation;
that the first determining unit (12) determines, according to the first service situation, whether data is sent in the current first transmission time duration comprises: determining whether data that is in the first data sampling result and obtained by N consecutive times of sampling starting from the initial moment is 0;
that the first obtaining unit (11) obtains the second service situation of the multimode base station in the second communications standard comprises: in a second preset period starting from an initial moment of the current second transmission time duration in the second communications standard, performing data sampling on the second transmission time duration to obtain a second data sampling result that indicates the second service situation; and
that the second determining unit (13) determines, according to the second service situation, whether data is sent in the current second transmission time duration comprises: determining whether data that is in the second data sampling result and obtained by N consecutive times of sampling starting from the initial moment is 0.

6. A method for controlling a power amplifier, wherein the method is applied to a multimode base station, the multimode base station is applied to a first communications standard and a second communications standard, the first communications standard is different from the second communications standard, and the method comprises:
obtaining (101) a first service situation of the multimode base station in the first communications standard and a second service situation of the multimode base station in the second communications standard;
determining (102), according to the first service situation, whether data is sent in a current first transmission time duration, wherein the first transmission time duration is a minimum data transmission time duration in the first communications standard;
determining (103), according to the second service situation, whether data is sent in a current second transmission time duration, wherein the second transmission time duration is a minimum data transmission time duration in the second communications standard;
obtaining (104) a shorter duration between the first transmission time duration and the second transmission time duration when no data is sent in the first transmission time duration and no data is sent in the second transmission time duration; and
shutting down (105) the power amplifier by using the obtained duration as a minimum granularity.

7. The method according to claim 6, wherein the power amplifier is started when data is sent in the first transmission time duration or data is sent in the second transmission time duration.

8. The method according to claim 6, wherein the shutting down the power amplifier by using the obtained duration as a minimum granularity comprises: controlling a duration for shutting down the power amplifier to be less than the obtained duration.

9. The method according to claim 6, wherein the shutting down the power amplifier by using the obtained duration as a minimum granularity comprises:
comparing a preset shutdown duration of the power amplifier with the obtained duration;
when the preset shutdown duration is less than or equal to the obtained duration, controlling the power amplifier to be in a shutdown state in the shutdown duration; or
when the shutdown duration is greater than the obtained duration, controlling the power amplifier to be in a shutdown state in the obtained duration.

10. The method according to claim 6, wherein the obtaining a first service situation of the multimode base station in the first communications standard comprises: in a first preset period starting from an initial moment of the current first transmission time duration in the first communications standard, performing data sampling on the first transmission time duration to obtain a first data sampling result that indicates the first service situation;
the determining, according to the first service situation, whether data is sent in a current first transmission time duration comprises: determining whether data that is in the first data sampling result and obtained by N consecutive times of sampling starting from the initial moment is 0;
the obtaining a second service situation of the multimode base station in the second communications standard comprises: in a second preset period starting from an initial moment of the current second transmission time duration in the second communications standard, performing data sampling on the second transmission time duration to obtain a second data sampling result that indicates the second service situation; and
the determining, according to the second service situation, whether data is sent in a current second transmission time duration comprises: determining whether data that is in the second data sampling result and obtained by N consecutive times of sampling starting from the initial moment is 0.

## Patentansprüche

1. Vorrichtung zur Regelung eines Leistungsverstärkers, wobei die Vorrichtung auf eine multimodale Basisstation angewandt wird, wobei die multimodale Basisstation auf einen ersten Kommunikationsstandard und einen zweiten Kommunikationsstandard angewandt wird, wobei sich der erste Kommunikationsstandard von dem zweiten Kommunikationsstandard unterscheidet, und die Vorrichtung Folgendes umfasst:
eine erste Erhalteinheit (11), die konfiguriert ist zum Erhalten einer ersten Dienstsituation der multimodalen Basisstation in dem ersten Kommunikationsstandard und einer zweiten Dienstsituation der multimodalen Basisstation in dem zweiten Kommunikationsstandard;
eine erste Bestimmungseinheit (12), die konfiguriert ist zum Bestimmen, gemäß der ersten Dienstsituation, ob Daten in einer aktuellen ersten Übertragungszeitdauer gesendet werden, wobei die erste Übertragungszeitdauer eine minimale Datenübertragungszeitdauer in dem ersten Kommunikationsstandard ist;
eine zweite Bestimmungseinheit (13), die konfiguriert ist zum Bestimmen, gemäß der zweiten Dienstsituation, ob Daten in einer aktuellen zweiten Übertragungszeitdauer gesendet werden, wobei die zweite Übertragungszeitdauer eine minimale Datenübertragungszeitdauer in dem zweiten Kommunikationsstandard ist;
eine zweite Erhalteinheit (14), die konfiguriert ist zum Erhalten einer kürzeren Dauer zwischen der ersten Übertragungszeitdauer und der zweiten Übertragungszeitdauer, wenn keine Daten in der ersten Übertragungszeitdauer gesendet werden und keine Daten in der zweiten Übertragungszeitdauer gesendet werden; und
eine erste Regelungseinheit (15), die konfiguriert ist zum Abschalten des Leistungsverstärkers durch Verwendung der erhaltenen Dauer als eine minimale Granularität.

2. Vorrichtung nach Anspruch 1, wobei die Vorrichtung ferner eine zweite Regelungseinheit (16) umfasst, die konfiguriert ist zum Starten des Leistungsverstärkers, wenn Daten in der ersten Übertragungszeitdauer gesendet werden oder Daten in der zweiten Übertragungszeitdauer gesendet werden.

3. Vorrichtung nach Anspruch 1, wobei die erste Regelungseinheit (15) spezifisch konfiguriert ist zum Regeln einer Dauer zum Abschalten des Leistungsverstärkers auf weniger als die erhaltene Dauer.

4. Vorrichtung nach Anspruch 1, wobei die erste Regelungseinheit (15) eine Vergleichsuntereinheit, eine erste Regelungsuntereinheit und eine zweite Regelungsuntereinheit umfasst, wobei
die Vergleichsuntereinheit konfiguriert ist zum Vergleichen einer voreingestellten Abschaltdauer des Leistungsverstärkers mit der erhaltenen Dauer;
die erste Regelungsuntereinheit konfiguriert ist zu Folgendem: wenn die voreingestellte Abschaltdauer kürzer als die oder gleich der erhaltenen Dauer ist, Regeln des Leistungsverstärkers in einen Abschaltzustand während der voreingestellten Abschaltdauer; und
die zweite Regelungsuntereinheit konfiguriert ist zu Folgendem: wenn die voreingestellte Abschaltdauer länger als die erhaltene Dauer ist, Regeln des Leistungsverstärkers in einen Abschaltzustand während der erhaltenen Dauer.

5. Vorrichtung nach Anspruch 1, wobei, dass die erste Erhalteinheit (11) die erste Dienstsituation der multimodalen Basisstation in dem ersten Kommunikationsstandard erhält, Folgendes umfasst: in einem ersten voreingestellten Zeitraum beginnend ab einem Anfangsmoment der aktuellen ersten Übertragungszeitdauer in dem ersten Kommunikationsstandard, Durchführen einer Datenabtastung in der ersten Übertragungszeitdauer zum Erhalten eines ersten Datenabtastungsergebnisses, das die erste Dienstsituation angibt;
dass die erste Bestimmungseinheit (12), gemäß der ersten Dienstsituation, bestimmt, ob Daten in der aktuellen ersten Übertragungszeitdauer gesendet werden, Folgendes umfasst: Bestimmen, ob Daten, die sich in dem ersten Datenabtastungsergebnis befinden und durch N aufeinanderfolgende Male der Abtastung beginnend ab dem Anfangsmoment erhalten werden, 0 sind;
dass die erste Erhalteinheit (11) die zweite Dienstsituation der multimodalen Basisstation in dem zweiten Kommunikationsstandard enthält, Folgendes umfasst: in einem zweiten voreingestellten Zeitraum beginnend ab einem Anfangsmoment der aktuellen zweiten Übertragungszeitdauer in dem zweiten Kommunikationsstandard, Durchführen einer Datenabtastung in der zweiten Übertragungszeitdauer zum Erhalten eines zweiten Datenabtastungsergebnisses, das die zweite Dienstsituation angibt; und
dass die zweite Bestimmungseinheit (13), gemäß der zweiten Dienstsituation, bestimmt, ob Daten in der aktuellen zweiten Übertragungszeitdauer gesendet werden, Folgendes umfasst: Bestimmen, ob Daten, die sich in dem zweiten Datenabtastungsergebnis befinden und durch N aufeinanderfolgende Male der Abtastung beginnend ab dem Anfangsmoment erhalten werden, 0 sind.

6. Verfahren zur Regelung eines Leistungsverstärkers, wobei das Verfahren auf eine multimodale Basisstation angewandt wird, wobei die multimodale Basisstation auf einen ersten Kommunikationsstandard und einen zweiten Kommunikationsstandard angewandt wird, wobei sich der erste Kommunikationsstandard von dem zweiten Kommunikationsstandard unterscheidet, und das Verfahren Folgendes umfasst:
Erhalten (101) einer ersten Dienstsituation der multimodalen Basisstation in dem ersten Kommunikationsstandard und einer zweiten Dienstsituation der multimodalen Basisstation in dem zweiten Kommunikationsstandard;
Bestimmen (102), gemäß der ersten Dienstsituation, ob Daten in einer aktuellen ersten Übertragungszeitdauer gesendet werden, wobei die erste Übertragungszeitdauer eine minimale Datenübertragungszeitdauer in dem ersten Kommunikationsstandard ist;
Bestimmen (103), gemäß der zweiten Dienstsituation, ob Daten in einer aktuellen zweiten Übertragungszeitdauer gesendet werden, wobei die zweite Übertragungszeitdauer eine minimale Datenübertragungszeitdauer in dem zweiten Kommunikationsstandard ist;
Erhalten (104) einer kürzeren Dauer zwischen der ersten Übertragungszeitdauer und der zweiten Übertragungszeitdauer, wenn keine Daten in der ersten Übertragungszeitdauer gesendet werden und keine Daten in der zweiten Übertragungszeitdauer gesendet werden; und
Abschalten (105) des Leistungsverstärkers durch Verwendung der erhaltenen Dauer als eine minimale Granularität.

7. Verfahren nach Anspruch 6, wobei der Leistungsverstärker gestartet wird, wenn Daten in der ersten Übertragungszeitdauer gesendet werden oder Daten in der zweiten Übertragungszeitdauer gesendet werden.

8. Verfahren nach Anspruch 6, wobei das Abschalten des Leistungsverstärkers durch Verwendung der erhaltenen Dauer als eine minimale Granularität Folgendes umfasst: Regeln einer Dauer zum Abschalten des Leistungsverstärkers auf weniger als die erhaltene Dauer.

9. Verfahren nach Anspruch 6, wobei das Abschalten des Leistungsverstärkers durch Verwendung der erhaltenen Dauer als eine minimale Granularität Folgendes umfasst:
Vergleichen einer voreingestellten Abschaltdauer des Leistungsverstärkers mit der erhaltenen Dauer;
wenn die voreingestellte Abschaltdauer kürzer als die oder gleich der erhaltenen Dauer ist, Regeln des Leistungsverstärkers in einen Abschaltzustand während der Abschaltdauer; und
wenn die Abschaltdauer länger als die erhaltene Dauer ist, Regeln des Leistungsverstärkers in einen Abschaltzustand während der erhaltenen Dauer.

10. Verfahren nach Anspruch 6, wobei das Erhalten einer ersten Dienstsituation der multimodalen Basisstation in dem ersten Kommunikationsstandard Folgendes umfasst: in einem ersten voreingestellten Zeitraum beginnend ab einem Anfangsmoment der aktuellen ersten Übertragungszeitdauer in dem ersten Kommunikationsstandard, Durchführen einer Datenabtastung in der ersten Übertragungszeitdauer zum Erhalten eines ersten Datenabtastungsergebnisses, das die erste Dienstsituation angibt;
das Bestimmen, gemäß der ersten Dienstsituation, ob Daten in einer aktuellen ersten Übertragungszeitdauer gesendet werden, Folgendes umfasst: Bestimmen, ob Daten, die sich in dem ersten Datenabtastungsergebnis befinden und durch N aufeinanderfolgende Male der Abtastung beginnend ab dem Anfangsmoment erhalten werden, 0 sind;
das Erhalten einer zweiten Dienstsituation der multimodalen Basisstation in dem zweiten Kommunikationsstandard Folgendes umfasst: in einem zweiten voreingestellten Zeitraum beginnend ab einem Anfangsmoment der aktuellen zweiten Übertragungszeitdauer in dem zweiten Kommunikationsstandard, Durchführen einer Datenabtastung in der zweiten Übertragungszeitdauer zum Erhalten eines zweiten Datenabtastungsergebnisses, das die zweite Dienstsituation angibt; und
das Bestimmen, gemäß der zweiten Dienstsituation, ob Daten in einer aktuellen zweiten Übertragungszeitdauer gesendet werden, Folgendes umfasst: Bestimmen, ob Daten, die sich in dem zweiten Datenabtastungsergebnis befinden und durch N aufeinanderfolgende Male der Abtastung beginnend ab dem Anfangsmoment erhalten werden, 0 sind.

## Revendications

1. Appareil pour commander un amplificateur de puissance, dans lequel l'appareil est appliqué à une station de base multimode, la station de base multimode est appliquée à une première norme de communication et à une seconde norme de communication, la première norme de communication est différente de la seconde norme de communication, et l'appareil comprend :
une première unité d'obtention (11), configurée pour obtenir un premier état de service de la station de base multimode dans la première norme de communication et un second état de service de la station de base multimode dans la seconde norme de communication ;
une première unité de détermination (12), configurée pour déterminer, en fonction du premier état de service, si des données sont envoyées ou non pendant une première durée de temps de transmission actuelle, dans lequel la première durée de temps de transmission est une durée de temps de transmission de données minimale dans la première norme de communication ;
une seconde unité de détermination (13), configurée pour déterminer, en fonction du second état de service, si des données sont envoyées ou non pendant une seconde durée de temps de transmission actuelle, dans lequel la seconde durée de temps de transmission est une durée de temps de transmission de données minimale dans la seconde norme de communication ;
une seconde unité d'obtention (14), configurée pour obtenir une durée plus courte entre la première durée de temps de transmission et la seconde durée de temps de transmission lorsqu'aucune donnée n'est envoyée pendant la première durée de temps de transmission et qu'aucune donnée n'est envoyée pendant la seconde durée de temps de transmission ; et
une première unité de commande (15), configurée pour arrêter l'amplificateur de puissance en utilisant la durée obtenue comme granularité minimale.

2. Appareil selon la revendication 1, dans lequel l'appareil comprend en outre une seconde unité de commande (16), configurée pour mettre en marche l'amplificateur de puissance lorsque des données sont envoyées pendant la première durée de temps de transmission ou que des données sont envoyées pendant la seconde durée de temps de transmission.

3. Appareil selon la revendication 1, dans lequel la première unité de commande (15) est spécifiquement configurée pour commander une durée pour éteindre l'amplificateur de puissance de sorte qu'elle soit inférieure à la durée obtenue.

4. Appareil selon la revendication 1, dans lequel la première unité de commande (15) comprend une sous-unité de comparaison, une première sous-unité de commande et une seconde sous-unité de commande, dans lequel
la sous-unité de comparaison est configurée pour comparer une durée d'arrêt prédéfinie de l'amplificateur de puissance avec la durée obtenue ;
la première sous-unité de commande est configurée : lorsque la durée d'arrêt prédéfinie est inférieure ou égale à la durée obtenue, pour commander l'amplificateur de puissance de sorte qu'il soit dans un état d'arrêt pendant la durée d'arrêt prédéfinie ; et
la seconde sous-unité de commande est configurée : lorsque la durée d'arrêt prédéfinie est supérieure à la durée obtenue, pour commander l'amplificateur de puissance de sorte qu'il soit dans un état d'arrêt pendant la durée obtenue.

5. Appareil selon la revendication 1, dans lequel, le fait que la première unité d'obtention (11) obtienne le premier état de service de la station de base multimode dans la première norme de communication consiste : pendant une première période prédéfinie commençant à partir d'un moment initial de la première durée de temps de transmission actuelle dans la première norme de communication, à effectuer un échantillonnage de données sur la première durée de temps de transmission pour obtenir un premier résultat d'échantillonnage de données qui indique le premier état de service ;
le fait que la première unité de détermination (12) détermine, en fonction du premier état de service, si des données sont envoyées ou non pendant la première durée de temps de transmission actuelle, consiste : à déterminer si des données, qui se trouvent dans le premier résultat d'échantillonnage de données et sont obtenues par N temps consécutifs d'échantillonnage commençant à partir du moment initial, sont ou non 0 ; le fait que la première unité d'obtention (11) obtienne le second état de service de la station de base multimode dans la seconde norme de communication consiste : pendant une seconde période prédéfinie commençant à partir d'un moment initial de la seconde durée de temps de transmission actuelle dans la seconde norme de communication, à effectuer un échantillonnage de données sur la seconde durée de temps de transmission pour obtenir un second résultat d'échantillonnage de données qui indique le second état de service ; et
le fait que la seconde unité de détermination (13) détermine, en fonction du second état de service, si des données sont envoyées ou non pendant la seconde durée de temps de transmission actuelle, consiste : à déterminer si des données, qui se trouvent dans le second résultat d'échantillonnage de données et sont obtenues par N temps consécutifs d'échantillonnage commençant à partir du moment initial, sont ou non 0.

6. Procédé pour commander un amplificateur de puissance, dans lequel le procédé est appliqué à une station de base multimode, la station de base multimode est appliquée à une première norme de communication et à une seconde norme de communication, la première norme de communication est différente de la seconde norme de communication, et le procédé consiste :
à obtenir (101) un premier état de service de la station de base multimode dans la première norme de communication et un second état de service de la station de base multimode dans la seconde norme de communication ;
à déterminer (102), en fonction du premier état de service, si des données sont envoyées ou non pendant une première durée de temps de transmission actuelle, dans lequel la première durée de temps de transmission est une durée de temps de transmission de données minimale dans la première norme de communication ;
à déterminer (103), en fonction du second état de service, si des données sont envoyées ou non pendant une seconde durée de temps de transmission actuelle, dans lequel la seconde durée de temps de transmission est une durée de temps de transmission de données minimale dans la seconde norme de communication ;
à obtenir (104) une durée plus courte entre la première durée de temps de transmission et la seconde durée de temps de transmission lorsqu'aucune donnée n'est envoyée pendant la première durée de temps de transmission et qu'aucune donnée n'est envoyée pendant la seconde durée de temps de transmission ; et
à arrêter (105) l'amplificateur de puissance en utilisant la durée obtenue comme granularité minimale.

7. Procédé selon la revendication 6, dans lequel l'amplificateur de puissance est mis en marche lorsque des données sont envoyées pendant la première durée de temps de transmission ou que des données sont envoyées pendant la seconde durée de temps de transmission.

8. Procédé selon la revendication 6, dans lequel l'arrêt de l'amplificateur de puissance en utilisant la durée obtenue comme granularité minimale consiste : à commander une durée pour éteindre l'amplificateur de puissance de sorte qu'elle soit inférieure à la durée obtenue.

9. Procédé selon la revendication 6, dans lequel l'arrêt de l'amplificateur de puissance en utilisant la durée obtenue comme granularité minimale consiste :
à comparer une durée d'arrêt prédéfinie de l'amplificateur de puissance avec la durée obtenue ;
lorsque la durée d'arrêt prédéfinie est inférieure ou égale à la durée obtenue, à commander l'amplificateur de puissance de sorte qu'il soit dans un état d'arrêt pendant la durée d'arrêt ; ou
lorsque la durée d'arrêt est supérieure à la durée obtenue, à commander l'amplificateur de puissance de sorte qu'il soit dans un état d'arrêt pendant la durée obtenue.

10. Procédé selon la revendication 6, dans lequel l'obtention d'un premier état de service de la station de base multimode dans la première norme de communication consiste :
pendant une première période prédéfinie commençant à partir d'un moment initial de la première durée de temps de transmission actuelle dans la première norme de communication, à effectuer un échantillonnage de données sur la première durée de temps de transmission pour obtenir un premier résultat d'échantillonnage de données qui indique le premier état de service ;
la détermination, en fonction du premier état de service, que des données sont envoyées pendant une première durée de temps de transmission actuelle, consiste : à déterminer si des données, qui se trouvent dans le premier résultat d'échantillonnage de données et sont obtenues par N temps consécutifs d'échantillonnage commençant à partir du moment initial, sont ou non 0 ;
l'obtention d'un second état de service de la station de base multimode dans la seconde norme de communication consiste : pendant une seconde période prédéfinie commençant à partir d'un moment initial de la seconde durée de temps de transmission actuelle dans la seconde norme de communication, à effectuer un échantillonnage de données sur la seconde durée de temps de transmission pour obtenir un second résultat d'échantillonnage de données qui indique le second état de service ; et
la détermination, en fonction du second état de service, que des données sont envoyées pendant une seconde durée de temps de transmission actuelle, consiste : à déterminer si des données, qui se trouvent dans le second résultat d'échantillonnage de données et sont obtenues par N temps consécutifs d'échantillonnage commençant à partir du moment initial, sont ou non 0.
